Europäisches Patentamt

European Patent Office

Office européen des brevets

(19)

(11) Veröffentlichungsnummer: **0 045 921**

**A1**

(12)

# EUROPÄISCHE PATENTANMELDUNG

(21) Anmeldenummer: **81106047.4**

(22) Anmeldetag: **01.08.81**

(51) Int. Cl.³: **F 24 J 3/02**
**G 02 B 5/10**

(30) Priorität: **08.08.80 DE 3030033**

(43) Veröffentlichungstag der Anmeldung:
**17.02.82 Patentblatt 82/7**

(84) Benannte Vertragsstaaten:
**AT BE CH DE FR GB IT LI LU NL SE**

(71) Anmelder: **Bomin-Solar GmbH & Co KG**
**Industriestrasse 8**
**D-7850 Lörrach(DE)**

(72) Erfinder: **Kleinwächter, Johann, Prof. Dr. Ing.**
**Industriestrasse 8**
**D-7850 Lörrach(DE)**

(74) Vertreter: **Beil, Walter, Dr. et al,**
**BEIL, WOLFF & BEIL Rechtsanwälte Adelonstrasse 58**
**D-6230 Frankfurt am Main 80(DE)**

(54) Sonnenkonzentratoren mit ortsfestem Sonnenenergie-Empfänger.

(57) Die Erfindung stellt ein hochkonzentrierendes Solaroptiksystem dar, das einen ortsfest aufgestellten Empfänger, vornehmlich einen Hohlraumlichtempfänger besitzt, in den das konzentrierte Lichtbündel kleinen Öffnungswinkels, unabhängig vom Sonnenstand aus konstanter Richtung, vornehmlich in der Symmetrieachse der Hohlraumlichtfalle, einfällt. Dies wird dadurch erreicht, dass ein Hohlspiegel verwendet wird, dessen Form sich aus einem ebenen Schnitt mit einem Rotationsparaboloid ergibt, der zur Parabolachse einen Winkel von 45° einschliesst. Dieser elliptisch begrenzte Parabolschnitt wird entgegen der Erdrotation um die siderische Polarachse gedreht, die mit der Sonnenempfängerachse zusammenfällt und durch den Mittelpunkt des elliptischen Parabolspiegels geht. Dieser Parabolspiegel wird erfindungsgemäss durch elastische oder plastische Verformung einer ursprünglich ebenen Spiegelfolie erreicht, die längs des elliptisch starren Rahmens eingespannt einem Luftüberdruck ausgesetzt wird.

Fig 2

EP 0 045 921 A1

Unsere Nr.: 23 458

Bomin-Solar GmbH & CoKG
7850 Lörrach, Industriestraße 8

Sonnenkonzentratoren mit ortsfestem
Sonnenenergie-Empfänger

Beschreibung:

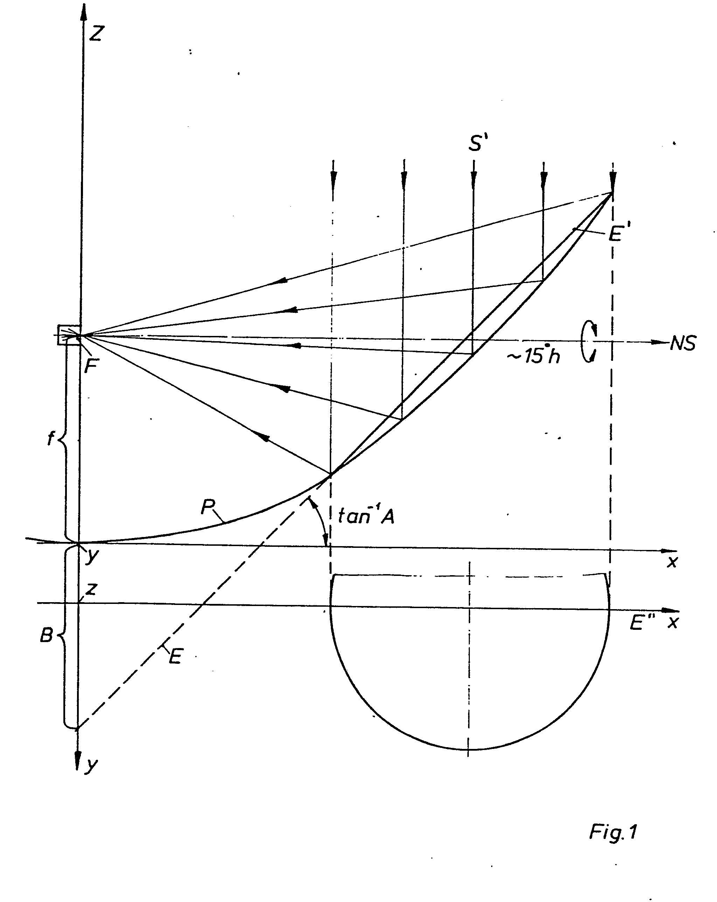

Innenverspiegelte Segmente von Rotationsparaboloiden P mit beliebiger Begrenzung haben nach Figur 1 bekanntlich die Eigentschaft, alle achsparallelen Lichtstrahlen S exakt im Brennpunkt F zu konzentrieren. Für das gewählte Koordinaten-System $Z = Z(r)$ und $r = \sqrt{x^2 + y^2}$ ist das Rotationsparaboloid P durch die Gleichung

$$Z_P = \frac{r^2}{4f} = \frac{x^2 + y^2}{4f}$$

mit der Brennweite f beschrieben.

Die Begrenzung des Paraboloidspiegels soll durch den Schnitt mit der Ebene E gegeben sein, die durch die Gleichung

$$Z_E = Ax - B$$

beschrieben ist.

Die gesuchte Begrenzung von P ist die Schnittkurve

$$Z_P = Z_E \quad \text{d.h.} \quad \frac{x^2 + y^2}{4f} = Ax - B$$

Die wahre Form dieser Begrenzung ist eine Ellipse, die jedoch nach obiger Gleichung für jede beliebige Schnittebene E, orthogonal auf die xy-Ebene projiziert, als Kreis erscheint. (E")

Eine besondere technische Bedeutung der geometrischen Eigenschaften des Rotationsparaboloides kommt seiner Herstellung durch die Verformung einer elastischen spiegelnden Kunststoff- oder Metallmembran durch den Luftüberdruck P zu. (Patentanmeldung J. und H. Kleinwächter P 29 326 45.2). Bei Vernachlässigung der Biegesteifigkeit und konstanter auch von der Richtung unabhängiger Zugspannung $\sigma$ gleich Dehnung $\varepsilon$ mal Elastizitätsmodul E ist die Gleichgewichtsform Z der Membran der Dicke S durch die partielle Differentialgleichung 2. Ordnung

$$\Delta Z = \frac{P}{\sigma S}$$

beschrieben.

Für eine um Z rotationssymmetrische Form ist der Nablaoperator

$$\Delta = \frac{d^2}{dr^2} + \frac{1}{r}\frac{d}{dr}$$

Die Lösung für Z wird damit

$$Z = \frac{P}{4\sigma 6} r^2$$

also ein Rotationsparaboloid.

Die Lösung gilt für alle auf diesem Rotationsparaboloid liegenden Begrenzungen, d.h. Membraneinspannungen. Insbesondere gilt sie auch für die leicht realisierbaren Ellipsen E als ebene Paraboloidschnitte.

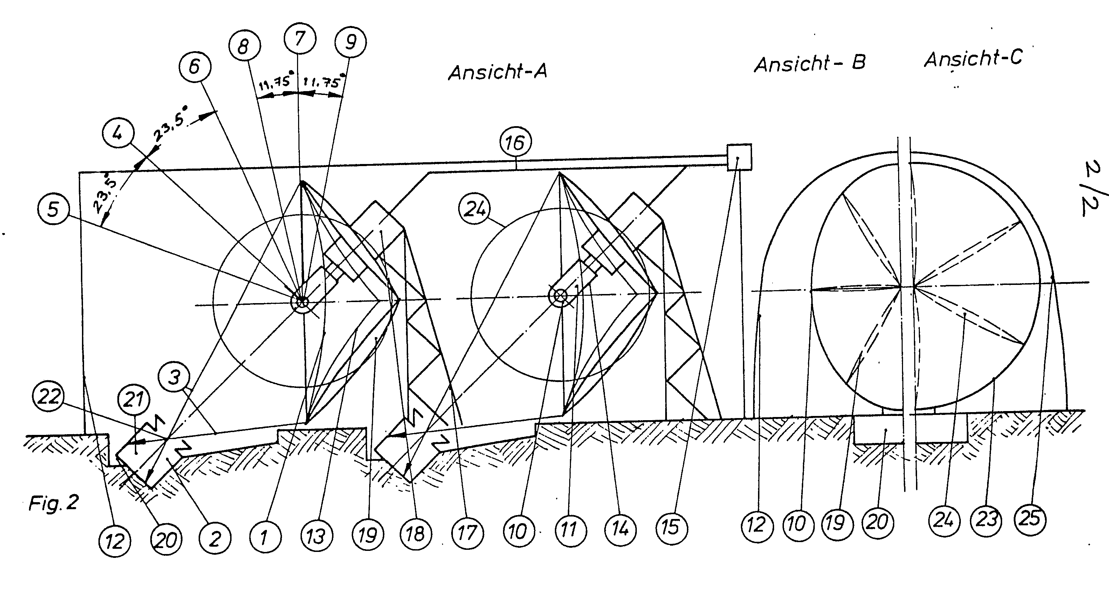

Beschreibung von Solarkonzentratoren mit elliptisch begrenztem Parabol-Membranspiegel Figur 2

Erfindungsgemäss stellt beispielsweise (1) einen parabolischen Membranhohlspiegel dar, dessen Brennpunkt (22) auf der siderischen Rotationsachse (11) liegt, die parallel zur Erdachse nach dem Polarstern weist.

Bei Tag-Nachtgleiche werden daher alle aus Richtung (4) kommenden Sonnenstrahlen in dem Strahlenbündel (3) in die feststehende Hohlraumlichtfalle (2) konzentriert, wenn der zu (11) um 45° geneigte Hohlspiegel (1) mit ca. 15 Grad pro Stunden so gedreht wird, dass er die Erdrotation kompensiert. Wegen der Neigung der Erdachse zur Ecliptik von 23,5 Grad muss der Parabolspiegel zwischen der Sommer- (6) und Wintersonnenwende (5) um ± 11,75 Grad (7,8,9) um die saisonale Achse (10) geschwenkt werden. Wegen dieses kleinen Winkels ist auch bei den Sonnenwendenzeiten der Kaustikfehler unbedeutend. Um den Parabolspiegel (1) aus einer im spannungslosen Zustand ebenen Spiegelmembran durch elastische Durchwölbung mittels Luftüberdruck herstellen zu können, muss sie auf einen elliptischen Rahmen aufgespannt werden, der mit den beiden Zapfen (10) in der Gabel (14) kardanisch um (10) und (11) gelagert ist. Das zur pneumatischen Verformung benötigte Unterdruckgehäuse wird nach rückwärts durch eine kegelige Membran (13) abgeschlossen, dessen Kegelspitze sich durch die knickfesten Streben (19) auf den elliptischen Kegelrahmen (23) abstützt.

In der 6-Uhr-Morgen und 6-Uhr-Abendstellung scheint der Ellipsenrahmen als der Kreis (23). Zur Korrektur der elliptischen Kontur des Spiegelrahmens (23) dienen auf der Vorderseite des Spiegels gespannte Drahtseilspeiche veränderlicher Länge (24).

Die kontinuierliche Drehung der Parabolspiegel (1) erfolgt durch die Getriebe (18), die in den Fachwerkgestellen (17) gelagert sind.

Bei Verwendung einer in Nord-Südrichtung angeordneten Kollektorfarm erfolgt der synchrone Antrieb der siderischen Getriebe (18) durch einen einzigen Uhrenmotor (15) mittels der Kopplungswelle (16). In diesem Falle wird die gesamte Konzentratorfarm zum Schutz gegen Windkräfte und Verschmutzung unter den transparenten Tunnel (12) gesetzt.

Um die Bauhöhe dieses Tunnels (12) möglichst klein zu halten, werden die ortsfesten Sonnenempfänger (2) mit ihren verlustmindernden Sekundärkonzentratorkegeln (21) etwas in die Erdmulden (20) versenkt.

Die elliptischen Spiegelrahmen (23) werden erfindungsgemäss durch Rollen von Profilstäben hergestellt, wobei der Krümmungsradius $\varrho$ nicht konstant bleibt, sondern längs des Ellipsenumfanges zwischen $\varrho$ max $= \dfrac{a^2}{b}$ und

$\varrho$ min $= \dfrac{b^2}{a}$ schwankt. Da a/b $= \sqrt{2}$ ist, ist $\dfrac{\varrho \text{ max}}{\varrho \text{ min}}$

nur $2\sqrt{2}$. Deshalb kann der elliptische Rahmen auch aus 4 Kreisbögen mit $\varrho$ max $= \dfrac{b^2}{a}$ und $\varrho$ min $= \dfrac{a^2}{b}$ durch elastische Verspannung zusammengesetzt werden.

Zwecks besserer Raumausnutzung kann erfindungsgemäss der Membraneinspannrahmen (23) in Ansicht C eine Kreisform haben. Dann entsteht die Kontur des Einspannrahmens entweder als Durchdringungslinie eines Kreiszylinders mit dem Spiegelparabol oder durch 2 ebene Schnitte als 2 Halbellipsen.

Der grosse Vorteil der beschriebenen Konzentratoren besteht in der ortsfesten Aufstellung der Sonnenempfänger, der Unabhängigkeit der eingestrahlten Energie von der Sonnenstellung und dem einfachen Tracking um die siderische Achse mit konstanter Winkelgeschwindigkeit.

Patentansprüche:

1. Sonnenkonzentrator mit Rotationsparabolhohlspiegel und Sonnenstrahlungsempfänger, dadurch gekennzeichnet, dass sich der Sonnenempfänger ortsfest im Brennpunkt des Paraboloidsegmentes befindet, der auf einer erdachsenparallelen siderischen Achse liegt, um die sich das Paraboloidspiegelsegment mit der Winkelgeschwindigkeit der Sonne dreht.

2. Sonnenkonzentrator nach Anspruch 1, dadurch gekennzeichnet, dass das Parabolspiegelsegment durch einen ebenen Schnitt mit dem Paraboloid begrenzt ist, der somit die Form einer Ellipse hat.

3. Sonnenkonzentrator nach Ansprüchen 1 und 2, dadurch gekennzeichnet, dass das Parabolspiegelsegment durch pneumatische oder hydraulische Verformung einer Spiegelmembran erhalten wird, dessen elliptischer Einspannungsrahmen durch Rollen eines Profilstabes mit entsprechend variablem Krümmungsradius erfolgt.

4. Sonnenkonzentrator nach 1 bis 3, dadurch gekennzeichnet, dass der Parabolspiegel aus einer leicht dehnbaren spiegelnden Membran besteht, die durch den Luftüberdruck auf eine steifere aber hochelastische Trägerfolie angedrückt wird.

5. Sonnenkonzentrator nach 1 bis 3, dadurch gekennzeichnet, dass der elliptische Einspannrahmen der Spiegelmembran durch Drahtsp eichen veränderbarer Länge versteift und korrigiert werden kann.

6. Sonnenkonzentrator nach 1, dadurch gekennzeichnet, dass die Spiegelmembranbegrenzung zwecks besserer Raumausnutzung in der Draufsicht ein voller Kreis ist.

1/2

Fig.1

Ansicht-A        Ansicht-B        Ansicht-C

11.75°  11.75°

23.5°

23.5°

Fig.2

2/2

0045921

0045921

Nummer der Anmeldung

EP 81106047.4

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | <u>DE - A1 - 2 932 645</u> (KLEINWÄCHTER)<br>+ Ansprüche 7,8 +<br>-- | 1,3,4 |
| A | <u>AT - B - 18 126</u> (HIMALAYA)<br>+ Fig. 12,13 +<br>-- | 1 |
| A | <u>DE - A1 - 2 506 905</u> (DÖRING)<br>+ Seite 2, Zeile 20 - Seite 3, Zeile 33; Seite 5, Zeilen 22-31; Seite 7, Zeile 21 - Seite 8, Zeile 16; Seite 10, Zeilen 14-31; Fig. 1,4 +<br>-- | 1,3,4, 6 |
| A | <u>DE - A1 - 2 740 813</u> (LEONHARDT)<br>+ Ansprüche 1-4; Seite 6, 3. Absatz; Seite 14, 4. Absatz - Seite 15, 1. Absatz; Seite 16, 3. Absatz; Fig. 4,6 +<br>-- | 1,3,4 |
| A | <u>US - A - 4 106 484</u> (DAME)<br>+ Fig. 3-5; Anspruch 1+<br>---- | 1,3 |

**KLASSIFIKATION DER ANMELDUNG (Int. Cl.³)**

F 24 J    3/02
G 02 B    5/10

**RECHERCHIERTE SACHGEBIETE (Int. Cl.³)**

F 24 J
F 03 G
G 02 B

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X  Der vorliegende Recherchenbericht wurde für alle Patentansprüche erstellt

| Recherchenort | Abschlußdatum der Recherche | Prüfer |
|---|---|---|
| WIEN | 28-10-1981 | SCHMIDT |

EPA form 1503.1   06.78